# EUROPÄISCHE PATENTANMELDUNG

(11) **EP 1 857 315 A2**
(43) Veröffentlichungstag der Anmeldung: **21.11.2007**
(21) Anmeldenummer: 07009140.0
(22) Anmeldetag: 07.05.2007
(51) Int. Cl.: B60K 6/365

(54) **Antriebsstrang, insbesondere für ein Kraftfahrzeug**

(30) Priorität: 17.05.2006 DE 102006023013
(71) Anmelder: LuK Lamellen und Kupplungsbau Beteiligungs KG, 77815 Bühl (DE)
(72) Erfinder: Mán, Lászlo Dr., 77833 Ottersweiler- Unzhurst (DE)

(57) **Zusammenfassung**

Ein Antriebsstrang, insbesondere für ein Kraftfahrzeug, hat eine eine Antriebswelle aufweisende Brennkraftmaschine und eine damit in Antriebsverbindung stehende, einen Rotor aufweisenden, elektrischen Maschine, die in einer ersten Betriebsart als Generator und in einer zweiten Betriebsart als Motor betreibbar ist. Zwischen der Antriebswelle und dem Rotor ist eine Kraftübertragungseinheit angeordnet, die zwei in entgegengesetzte Richtungen wirkende Freiläufe und ein Planetengetriebe aufweist. Die Antriebswelle steht im Generatorbetrieb über einen ersten Freilauf und im Motorbetrieb über das Planetengetriebe und einen zweiten Freilauf mit dem Rotor in Antriebsverbindung. Das Planetengetriebe weist zwei, eine unterschiedliche Anzahl Zähne aufweisende, Sonnenräder und mindestens ein mit beiden Sonnenrädern kämmendes Planetenrad auf.

## Beschreibung

Die Erfindung betrifft einen Antriebsstrang, insbesondere für ein Kraftfahrzeug, mit einer eine Antriebswelle aufweisenden Brennkraftmaschine und einer damit in Antriebsverbindung stehenden, einen Rotor aufweisenden elektrischen Maschine, die in einer ersten Betriebsart als Generator und in einer zweiten Betriebsart als Motor betreibbar ist, wobei zwischen der Antriebswelle und dem Rotor eine Kraftübertragungseinheit angeordnet ist, die zwei in entgegengesetzte Richtungen wirkende Freiläufe und ein Planetengetriebe aufweist, wobei die Antriebswelle im Generatorbetrieb über einen ersten Freilauf und im Motorbetrieb über das Planetengetriebe und einen zweiten Freilauf mit dem Rotor in Antriebsverbindung steht.

Ein derartiger Antriebsstrang, der als Brennkraftmaschine eine Hubkolbenverbrennungsmaschine aufweist, ist aus WO 00/13927 bekannt. Die elektrische Maschine des Antriebsstrangs dient einerseits als Anlasser für die Hubkolbenverbrennungsmaschine und andererseits als Lichtmaschine, welche bei in Betrieb befindlicher Hubkolbenverbrennungsmaschine die mittels der Hubkolbenverbrennungsmaschine erzeugte kinetische Energie in elektrische Energie umwandelt, beispielsweise um eine Fahrzeugbatterie aufzuladen und/oder in dem Kraftfahrzeug vorgesehene elektrische Verbraucher mit Strom zu versorgen. Während des Generatorbetriebs ist die elektrische Maschine über einen ersten Freilauf direkt mit einer Transmissionsscheibe verbunden, die über einen umlaufenden Riemen mit einem auf der Antriebswelle angeordneten Antriebsrad in Antriebsverbindung steht. Durch den Freilauf ist die mittlere Drehzahl des Rotors der elektrischen Maschine etwas größer als die mittlere Drehzahl der Kurbelwelle der Hubkolbenverbrennungsmaschine.

Damit die elektrische Maschine die relativ große und schwere Hubkolbenverbrennungsmaschine leichter starten kann, ist zwischen der elektrischen Maschine und der Hubkolbenverbrennungsmaschine ein Planetengetriebe angeordnet, das während des Motorbetriebs der elektrischen Maschine über einen zweiten Freilauf mit der Transmissionsscheibe gekoppelt ist. Das Planetengetriebe hat ein drehfest mit dem Rotor der elektrischen Maschine verbundenes Sonnenrad, das über einen Planetenradsatz mit einem feststehenden Hohlrad verbunden ist. Ein die Planetenräder tragender Steg treibt über den zweiten Freilauf die Transmissionsscheibe an. Dadurch dreht die elektrische Maschine schneller als die Kurbelwelle der Hubkolbenverbrennungsmaschine. In der Offenlegungsschrift wird für den Motorbetrieb der elektrischen Maschine ein Übersetzungsverhältnis im Bereich von 3:2 bis 7:1 vorgeschlagen. Über den ersten Freilauf wird während des Motorbetriebs kein Drehmoment übertragen. Beim Generatorbetrieb überträgt dagegen der erste Freilauf das Drehmoment und der zweite Freilauf überdreht. Obwohl sich der Antriebsstrang in der Praxis bewährt hat, weist er dennoch Nachteile auf. So kann die elektrische Maschine während des Betriebs der Hubkolbenverbrennungsmaschine nicht als zusätzlicher Antriebsmotor für den Antriebsstrang genutzt werden, beispielsweise um das Antriebs-Drehmoment beim Beschleunigen des Kraftfahrzeugs zu erhöhen (Booster-Funktion).

Es besteht deshalb die Aufgabe, einen Antriebsstrang der eingangs genannten Art zu schaffen, der es ermöglicht, die elektrische Maschine während des Betriebs der Brennkraftmaschine wahl- oder wechselweise als Generator oder als Motor zu benutzen.

Diese Aufgabe wird gelöst durch einen Antriebsstrang mit einer eine Antriebswelle aufweisenden Brennkraftmaschine und einer damit in Antriebsverbindung stehenden, einen Rotor aufweisenden elektrischen Maschine, die in einer ersten Betriebsart als Generator und in einer zweiten Betriebsart als Motor betreibbar ist, wobei zwischen der Antriebswelle und dem Rotor eine Kraftübertragungseinheit angeordnet ist, die zwei in entgegengesetzte Richtungen wirkende Freiläufe und ein Planetengetriebe aufweist, wobei die Antriebswelle im Generatorbetrieb über einen ersten Freilauf und im Motorbetrieb über das Planetengetriebe und einen zweiten Freilauf mit dem Rotor in Antriebsverbindung steht, und wobei das Planetengetriebe zwei, eine unterschiedliche Anzahl Zähne aufweisende, Sonnenräder und mindestens ein mit beiden Sonnenrädern kämmendes Planetenrad aufweist.

In vorteilhafter Weise ergibt sich durch die beiden über das mindestens eine Planentenrad miteinander verbundenen Sonnenräder ein geringes Übersetzungsverhältnis des Planetengetriebes, so dass die elektrische Maschine während des Betriebs der Brennkraftmaschine zwischen dem Generatorbetrieb und dem Motorbetrieb umgeschaltet werden kann, um eine Booster-Funktion zu ermöglichen. Dabei braucht die im Generatorbetrieb befindliche elektrische Maschine nur etwas beschleunigt zu werden, damit der erste Freilauf überdreht und der zweite Freilauf sperrt. In entsprechender Weise reduziert sich die Drehzahl der elektrischen Maschine beim Umschalten vom Motorbetrieb zum Generatorbetrieb nur geringfügig, so dass die Elektrische Maschine im Anschluss an den Motorbetrieb gleich als Generator genutzt werden kann. Da die Freiläufe Drehzahlunförmigkeiten der Hubkolbenverbrennungsmaschine jeweils teilweise ausgleichen, ergibt sich gegenüber einer fest mit der Transmissionsscheibe gekoppelten elektrischen Maschine ein deutlich geringerer Verschleiß des Riemens.

Besonders vorteilhaft ist, wenn die Sonnenräder einen unterschiedlichen Teilkreisdurchmesser aufweisen, und wenn die Profile der Zähne der Sonnenräder derart zueinander verschoben sind, dass beide Sonnenräder denselben Modul aufweisen. Bei der Herstellung der Sonnenräder wird dann nur ein einziges Verzahnungswerkzeug benötigt.

Bei einer bevorzugten Ausgestaltung der Erfindung ist ein erstes Sonnenrad drehfest mit dem Rotor und ein zweites Sonnenrad drehfest mit einer Transmissionsscheibe verbunden, die über ein Zugelement, insbesondere einen umlaufenden Riemen, mit einem auf der Antriebswelle angeordneten Antriebsrad in Antriebsverbindung steht. Die elektrische Maschine und die Kraftübertragungseinheit bilden dabei einen riemengetriebenen Starter-Generator mit Schwingungsentkopplung und Anfahrhilfe.

Vorteilhaft ist, wenn das erste Sonnenrad eine Innenhöhlung aufweist, und wenn der zweite Freilauf in der Innenhöhlung angeordnet ist. Die Kraftübertragungseinheit kann dann sehr kompakte Abmessungen aufweisen.

Bei einer vorteilhaften Ausgestaltung der Erfindung weist der zweite Freilauf einen inneren und einen äußeren Freilaufring auf, wobei der innere Freilaufring mit einem Gehäuseteil der elektrischen Maschine und der äußere Freilaufring mit einem Steg drehfest verbunden ist, an dem das mindestens eine Planetenrad drehbar gelagert ist. Auch durch diese Maßnahme wird eine kompakte Bauform der Kraftübertragungseinheit ermöglicht.

Zweckmäßigerweise ist ein dem äußeren Freilaufring abgewandter Wandungsbereich des Stegs vorzugsweise mittels einer Gleitlagerung an einer die Innenhöhlung umgrenzenden Innenumfangswand des ersten Sonnenrads abgestützt. Die Kraftübertragungseinheit ermöglicht dann eine kurze Bauform und einen biegesteifen Aufbau.

Vorteilhaft ist, wenn das zweite Sonnenrad hohlradartig ausgestaltet ist, und wenn der erste Freilauf in einem von dem zweiten Sonnenrad umgrenzten Innenraum angeordnet ist. Auch durch diese Maßnahme werden eine kurze Bauform und ein biegesteifer Aufbau der Kraftübertragungseinheit erreicht.

Die vorstehend genannte Aufgabe wird auch durch einen Antriebsstrang mit einer eine Antriebswelle aufweisenden Brennkraftmaschine und einer damit in Antriebsverbindung stehenden, einen Rotor aufweisenden elektrischen Maschine gelöst, die in einer ersten Betriebsart als Generator und in einer zweiten Betriebsart als Motor betreibbar ist, wobei zwischen der Antriebswelle und dem Rotor eine Kraftübertragungseinheit angeordnet ist, die zwei in entgegengesetzte Richtungen wirkende Freiläufe und ein Planetengetriebe aufweist, wobei die Antriebswelle im Generatorbetrieb über einen ersten Freilauf und im Motorbetrieb über das Planetengetriebe und einen zweiten Freilauf mit dem Rotor in Antriebsverbindung steht, und wobei das Planetengetriebe eine unterschiedliche Anzahl Zähne aufweisende Hohlräder und mindestens ein mit beiden Hohlrädern kämmendes Planetenrad aufweist.

In vorteilhafter Weise ergibt sich durch die beiden über das mindestens eine Planentenrad miteinander verbundenen Hohlräder ein geringes Übersetzungsverhältnis des Planetengetriebes, so dass die elektrische Maschine während des Betriebs der Brennkraftmaschine zwischen dem Generatorbetrieb und dem Motorbetrieb umgeschaltet werden kann, um eine Booster-Funktion zu ermöglichen. Dabei braucht die elektrische Maschine beim Umschalten zwischen Generator- und Motorbetrieb nur geringfügig beschleunigt bzw. abgebremst zu werden.

Vorteilhaft ist, wenn die Hohlräder einen unterschiedlichen Teilkreisdurchmesser aufweisen, und wenn die Profile der Zähne der Hohlräder derart zueinander verschoben sind, dass beide Hohlräder denselben Modul aufweisen. Bei der Herstellung der Hohlräder wird dann nur ein einziges Verzahnungswerkzeug benötigt.

Bei einer vorteilhaften Ausgestaltung der Erfindung beträgt das Übersetzungsverhältnis des Planetengetriebes zwischen 1,02 und 1,07, insbesondere zwischen 1,03 und 1,06 und bevorzugt zwischen 1,04 und 1,05. Bei diesem Übersetzungsverhältnis wird in der Praxis bei den meisten Hubkolbenmotoren im Generatorbetrieb der zweite Freilauf und im Motorbetrieb der erste Freilauf überrundet. Dabei ist das Übersetzungsverhältnis so gering wie möglich gewählt, damit die elektrische Maschine ohne nennenswert beschleunigt oder abgebremst werden zu müssen, zwischen dem Generator- und Motorbetrieb umgeschaltet werden kann.

Nachfolgend ist ein Ausführungsbeispiel der Erfindung anhand der Zeichnung näher erläutert.
Es zeigen:
- Fig. 1: einen Teillängsschnitt durch einen riemengetriebenen Startergenerator und
- Fig. 2: eine graphische Darstellung der Kurbelwellendrehzahl einer Hubkolbenverbrennungsmaschine und der Rotordrehzahl einer elektrischen Maschine, wobei auf der Abszisse die Zeit t und auf der Ordinate die Drehzahl n aufgetragen sind.

Ein Antriebsstrang für ein Kraftfahrzeug hat eine an sich bekannte, als Hubkolbenverbrennungsmaschine ausgebildete Brennkraftmaschine und eine damit in Wirkverbindung stehende elektrische Maschine, die in einer ersten Betriebsart als Generator und in einer zweiten Betriebsart als Motor betreibbar ist.

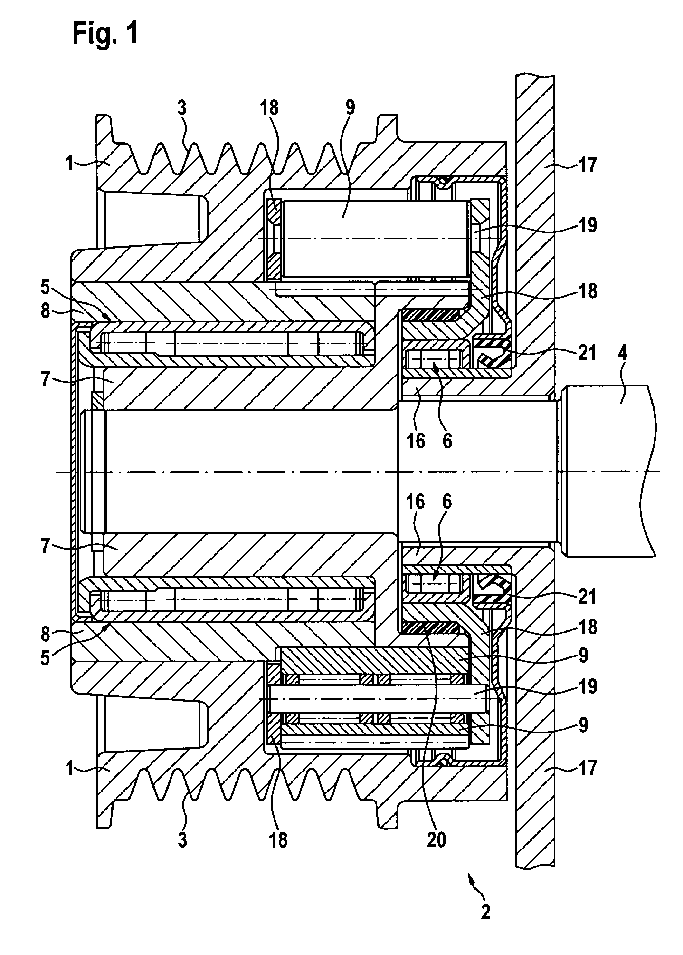

Die Brennkraftmaschine weist eine an einem Motorblock drehbar gelagerte Antriebswelle auf, auf der ein Antriebsrad angeordnet ist, das über einen umlaufenden Riemen mit einer Transmissionsscheibe 1 einer in einem Kraftübertragungsweg zwischen der Brennkraftmaschine und der elektrischen Maschine angeordneten Kraftübertragungseinheit 2 in Antriebsverbindung steht. Wie in Fig. 1 erkennbar ist, weist die Transmissionsscheibe 1 an ihrem Außenumfang eine wellenförmige Profilierung 3 auf, die an einer dazu passenden Profilierung des in der Zeichnung nicht näher dargestellten Riemens zur Anlage kommt.

Die elektrische Maschine hat einen Stator mit einer Wicklung und einen drehbar daran angeordneten Rotor, der über einen Luftspalt magnetisch mit dem Stator zusammenwirkt. Der Rotor hat eine Rotorwelle 4, auf der die Kraftübertragungseinheit 2 angeordnet ist.

Die Kraftübertragungseinheit 2 weist zwei in entgegengesetzte Richtungen wirkende Freiläufe 5, 6 und ein Planetengetriebe auf. Im Generatorbetrieb der elektrischen Maschine steht die Antriebswelle über einen ersten Freilauf 5 und im Motorbetrieb über das Planetengetriebe und einen zweiten Freilauf 6 mit dem Rotor in Antriebsverbindung. Der erste Freilauf 5 überdreht im Motorbetrieb und der zweite Freilauf 6 im Generatorbetrieb.

In Fig. 1 ist erkennbar, dass das Planetengetriebe zwei Sonnenräder 7, 8 und einen Satz Planetenräder 9 aufweist. Die Planetenräder 9 haben jeweils eine über ihre Länge durchgehende Verzahnung. Ein erster Abschnitt der Verzahnung kämmt jeweils mit einem ersten Sonnenrad 7 und ein zweiter Abschnitt der Verzahnung mit einem zweiten Sonnenrad 8. Die Sonnenräder 7, 8 haben dasselbe Modul, jedoch eine unterschiedliche Anzahl Zähne und somit einen unterschiedlichen Teilkreisdurchmesser. Das erste Sonnenrad 7 ist drehfest mit der Rotorwelle 4 und das zweite Sonnenrad 8 drehfest mit der Transmissionsscheibe 1 verbunden.

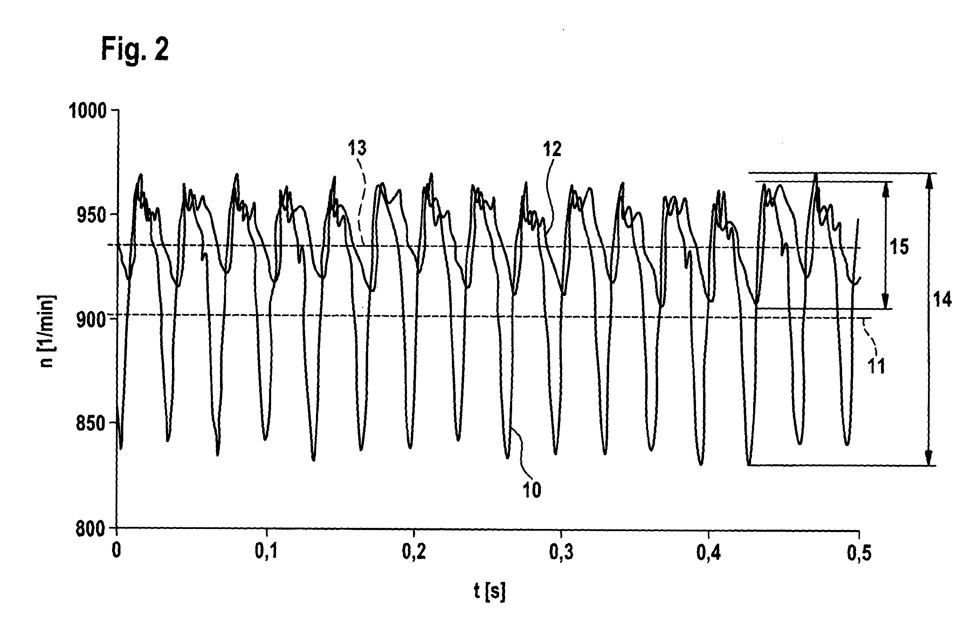

Anhand des in Fig. 2 graphisch dargestellten Kurbelwellendrehzahlsignals 10 ist erkennbar, dass die Drehzahl der Kurbelwelle Unförmigkeiten aufweist und in einem Intervall zwischen etwa 840 min⁻¹ und 970 min⁻¹ um einen Mittelwert 11 schwankt. Aufgrund des ersten Freilaufs 5 sind die Drehzahlunförmigkeiten der Rotorwelle 4 geringer als die der Kurbelwelle. In Fig. 2 ist das entsprechende Drehzahlsignal der Rotorwelle 4 mit der Bezugszahl 12 und der Mittelwert des Drehzahlsignals 12 mit der Bezugszahl 13 bezeichnet. Deutlich ist erkennbar, dass die Schwankung 14 des Kurbelwellendrehzahlsignals 10 geringer ist als die Schwankung 15 des Rotorwellen-Drehzahlsignals.

Das Übersetzungsverhältnis des Planetengetriebes ist so gewählt, dass es dem Quotient aus dem Mittelwert des Drehzahlsignals 12 und dem Mittelwert 11 des Kurbelwellendrehzahlsignals 10 entspricht oder etwas größer ist als dieser Quotient, so dass der zweite Freilauf 6 im Motorbetrieb gerade noch nicht überdreht.

Das erste Sonnenrad 7 weist einen Verzahnungsabschnitt mit einer Außenverzahnung und einen einstückig damit verbundenen Hülsenabschnitt auf, der auf der Rotorwelle 4 angeordnet und über eine Welle-Nabe-Verbindung, wie z.B. ein Polygon, drehfest mit dieser verbunden ist. Die Außenverzahnung hat einen größeren Außendurchmesser als der Hülsenabschnitt. Zwischen dem Hülsenabschnitt und der Außenverzahnung ist ein Absatz vorgesehen.

In dem von der Außenverzahnung umgrenzten Raum weist das erste Sonnenrad 7 eine Innenhöhlung auf, in welcher der zweite Freilauf 6 angeordnet ist. Ein innerer Freilaufring des zweiten Freilaufs 6 ist drehfest mit einem Ringflansch 16 eines feststehenden Gehäuseteils 17 der elektrischen Maschine verbunden. Der Ringflansch 16 umgrenzt eine Öffnung des Gehäuseteils 17, welche die Rotorwelle 4 durchsetzt. Ein äußerer Freilaufring des zweiten Freilaufs 6 ist drehfest mit einem Steg 18 verbunden, an dem die Planetenräder 9 auf Bolzen 19 mittels Wälzlagern um parallel zu den Achsen der Sonnenräder 7, 8 verlaufende Achsen drehbar gelagert sind. Ein dem äußeren Freilaufring abgewandter Wandungsbereich des Stegs 18 ist mittels einer Gleitlagerung 20 an einer die Innenhöhlung umgrenzenden Innenumfangswand des ersten Sonnenrads 7 abgestützt.

Das zweite Sonnenrad 8 ist als Hohlrad ausgestaltet und an einem der elektrischen Maschine abgewandten Endbereich in Axialrichtung bis über seine Außenverzahnung verlängert. In dem von dem zweiten Sonnenrad 8 umgrenzten Innenraum ist der erste Freilauf 5 angeordnet. Ein äußerer Freilaufring des ersten Freilaufs 5 ist mit der Innenumfangswand des zweiten Sonnenrads 8 und ein innerer Freilaufring des ersten Freilaufs 5 mit dem Hülsenabschnitt des ersten Sonnenrads 7 verpresst.

Bei der Montage der Kraftübertragungseinheit wird wie folgt vorgegangen: Das zweite Sonnenrad 8 wird in die Transmissionsscheibe 1, der erste Freilauf 5 (Generatorfreilauf) in das zweite Sonnenrad 8 und dann das erste Sonnenrad 7 in den ersten Freilauf 5 eingepresst. Der Steg 18 wird aus zwei Stegteilen zusammengesetzt und durch die die Planetenräder 9 tragenden Stufen-Bolzen 19 zusammengehalten. In den Steg 18 wird der zweite Freilauf 6 (Startfreilauf) eingepresst. Der innere Freilaufring des zweiten Freilaufs 6 wird auf das Gehäuseteil 17 aufgepresst.

Erwähnt werden soll noch, dass die Kraftübertragungseinheit 2 mit Fließfett gefüllt ist und durch einen Radialwellendichtring 21 abgedichtet ist.

### Bezugszeichenliste

- 1: Transmissionsscheibe
- 2: Kraftübertragungseinheit
- 3: Profilierung
- 4: Rotorwelle
- 5: erster Freilauf
- 6: zweiter Freilauf
- 7: erstes Sonnenrad
- 8: zweites Sonnenrad
- 9: Planetenrad
- 10: Kurbelwellendrehzahlsignal
- 11: Mittelwert der Kurbelwellendrehzahl
- 12: Drehzahlsignal der Rotorwelle
- 13: Mittelwert des Drehzahlsignals
- 14: Schwankung des Kurbelwellendrehzahlsignals
- 15: Schwankung des Rotorwellen-Drehzahlsignals
- 16: Ringflansch
- 17: Gehäuseteil
- 18: Steg
- 19: Bolzen
- 20: Gleitlagerung
- 21: Radialwellendichtring

## Patentansprüche

1. Antriebsstrang, insbesondere für ein Kraftfahrzeug, mit einer eine Antriebswelle aufweisenden Brennkraftmaschine und einer damit in Antriebsverbindung stehenden, einen Rotor aufweisenden elektrischen Maschine, die in einer ersten Betriebsart als Generator und in einer zweiten Betriebsart als Motor betreibbar ist, wobei zwischen der Antriebswelle und dem Rotor eine Kraftübertragungseinheit (2) angeordnet ist, die zwei in entgegengesetzte Richtungen wirkende Freiläufe (5, 6) und ein Planetengetriebe aufweist, wobei die Antriebswelle im Generatorbetrieb über einen ersten Freilauf (5) und im Motorbetrieb über das Planetengetriebe und einen zweiten Freilauf (6) mit dem Rotor in Antriebsverbindung steht, und wobei das Planetengetriebe zwei eine unterschiedliche Anzahl Zähne aufweisende Sonnenräder (7, 8) und mindestens ein mit beiden Sonnenrädern (7, 8) kämmendes Planetenrad aufweist.

2. Antriebsstrang nach Anspruch 1, **dadurch gekennzeichnet, dass** die Sonnenräder (7, 8) einen unterschiedlichen Teilkreisdurchmesser aufweisen, und dass die Profile der Zähne der Sonnenräder (7, 8) derart zueinander verschoben sind, dass beide Sonnenräder (7, 8) denselben Modul aufweisen.

3. Antriebsstrang nach Anspruch 1 oder 2, **dadurch gekennzeichnet, dass** ein erstes Sonnenrad (7) drehfest mit dem Rotor und ein zweites Sonnenrad (8) drehfest mit einer Transmissionsscheibe (1) verbunden ist, die über ein Zugelement, insbesondere einen umlaufenden Riemen, mit einem auf der Antriebswelle angeordneten Antriebsrad in Antriebsverbindung steht.

4. Antriebsstrang nach einem der Ansprüche 1 bis 3, **dadurch gekennzeichnet, dass** das erste Sonnenrad (7) eine Innenhöhlung aufweist, und dass der zweite Freilauf 6) in der Innenhöhlung angeordnet ist.

5. Antriebsstrang nach einem der Ansprüche 1 bis 4, **dadurch gekennzeichnet, dass** der zweite Freilauf (6) einen inneren und einen äußeren Freilaufring aufweist, dass der innere Freilaufring mit einem Gehäuseteil (17) der elektrischen Maschine und der äußere Freilaufring mit einem Steg (18) drehfest verbunden ist, an dem das mindestens eine Planetenrad (9) drehbar gelagert ist.

6. Antriebsstrang nach einem der Ansprüche 1 bis 5, **dadurch gekennzeichnet, dass** ein dem äußeren Freilaufring abgewandter Wandungsbereich des Stegs (18) vorzugsweise mittels einer Gleitlagerung (20) an einer die Innenhöhlung umgrenzenden Innenumfangswand des ersten Sonnenrads (7) abgestützt ist.

7. Antriebsstrang nach einem der Ansprüche 1 bis 6, **dadurch gekennzeichnet, dass** das zweite Sonnenrad (8) hohlradartig ausgestaltet ist, und dass der erste Freilauf (5) in einem von dem zweiten Sonnenrad (8) umgrenzten Innenraum angeordnet ist.

8. Antriebsstrang nach einem der Ansprüche 1 bis 7, **dadurch gekennzeichnet, dass** an das erste Sonnenrad (7) ein Hülsenteil angeformt ist, das auf einer mit dem Rotor verbundenen Rotorwelle (4) angeordnet ist, und dass der erste Freilauf (5) zwischen dem Hülsenteil und dem zweiten Sonnenrad (8) angeordnet ist.

9. Antriebsstrang, insbesondere für ein Kraftfahrzeug, mit einer eine Antriebswelle aufweisenden Brennkraftmaschine und einer damit in Antriebsverbindung stehenden, einen Rotor aufweisenden elektrischen Maschine, die in einer ersten Betriebsart als Generator und in einer zweiten Betriebsart als Motor betreibbar ist, wobei zwischen der Antriebswelle und dem Rotor eine Kraftübertragungseinheit (2) angeordnet ist, die zwei in entgegengesetzte Richtungen wirkende Freiläufe (5, 6) und ein Planetengetriebe aufweist, wobei die Antriebswelle im Generatorbetrieb über einen ersten Freilauf (5) und im Motorbetrieb über das Planetengetriebe und einen zweiten Freilauf (6) mit dem Rotor in Antriebsverbindung steht, und wobei das Planetengetriebe eine unterschiedliche Anzahl Zähne aufweisende Hohlräder und mindestens ein mit beiden Hohlrädern kämmendes Planetenrad (9) aufweist.

10. Antriebsstrang nach Anspruch 9, **dadurch gekennzeichnet, dass** die Hohlräder einen unterschiedlichen Teilkreisdurchmesser aufweisen, und dass die Profile der Zähne der Hohlräder derart zueinander verschoben sind, dass beide Hohlräder denselben Modul aufweisen.

11. Antriebsstrang nach einem der Ansprüche 1 bis 10, **dadurch gekennzeichnet, dass** das Übersetzungsverhältnis des Planetengetriebes zwischen 1,02 und 1,07, insbesondere zwischen 1,03 und 1,06 und bevorzugt zwischen 1,04 und 1,05 beträgt.
